# EUROPEAN PATENT SPECIFICATION

(11) **EP 0 774 092 B1**
(45) Date of publication and mention of the grant of the patent: **28.03.2001**
(21) Application number: 94926466.7
(22) Date of filing: 13.07.1994
(51) Int. Cl.: F16L 17/00, F16L 23/16, F16L 23/18, F16J 15/06

(54) **MULTI-RING GASKET AND USE THEREOF IN A JOINT ASSEMBLY**
MEHRRINGDICHTUNG UND VERWENDUNG IN EINER VERBINDUNGSANORDNUNG
JOINT D'ETANCHEITE STATIQUE A PLUSIEURS ANNEAUX ET UTILISATION DANS UN RACCORD

(43) Date of publication of application: 21.05.1997
(73) Proprietor: KC Multi-Ring Products, Inc., Castle Rock, WA 98611 (US)
(72) Inventor: Carr, Ronald L., Castle Rock, WA 98611 (US)
(74) Representative: Fleuchaus, Leo, Dipl.-Ing.
(86) International application number: PCT/US94/08087
(87) International publication number: WO 96/02787

(56) References cited:
- FR-A- 1 125 110
- GB-A- 1 061 419
- US-A- 2 532 891
- US-A- 3 141 686
- US-A- 4 002 344
- US-A- 4 269 417
- US-E- R E11 858

## Description

### Background of the Invention

This invention relates to flanged pipe joint assemblies, and particularly to gaskets for sealing the joint between two pipes of a flanged pipe assembly, assemblies employing such gaskets, and assemblies which permit monitoring and control of the quality of the seal provided by such gaskets. More particularly, the present invention relates to a gasket having a first strip, a second strip and spokes made of the same sealing material. Such gaskets are for example known from US-A-2,532,891 or US-A-4,269,417.

In the construction of industrial facilities, such as pulp and paper mills and chemical plants, there is usually a need to employ pipe to convey fluids and fluid-like mixtures throughout the facility. Since these materials are typically reactive, modern practice favors the use of polyvinylchloride ("PVC"), chlorinated polyvinylchloride ("CPVC"), fiberglass-reinforced plastic ("FRP") polyvinylidene fluoride ("PVDF"), polypropylene ("PP") or other essentially chemically inert, generally nonmetallic pipe.

The pipe used in such facilities includes flanges at the ends of the pipe sections for assembling sections of pipe together at a joint, as is commonly understood in the art. Typically, a gasket is placed between the flanges, and the flanges are forcibly held together by bolts inserted through apertures disposed in the flanges and gaskets, or around the gaskets. When the flanges are forcibly drawn together by the bolts, uneven stress distributions around the flange tend to weaken, and ultimately break, the flanges. While PVC, CPVC, FRP, PVDF, PP and other nonmetallic pipe used in such installations have the advantage of durability in the caustic and acidic environments of the reactive materials which flow through the pipes, their flanges are particularly susceptible to breakage due to uneven stress distributions.

The gasket provides a seal between the flanges of the pipe sections to contain within the pipe the reactive materials conveyed therethrough. However, gaskets generally allow some fugitive emissions of the reactive materials from the pipe. Moreover, gaskets tend to degrade over time, and ultimately fail, which can lead to substantial fugitive emissions. To minimize fugitive emissions, joint assemblies are typically monitored regularly on an assembly-by-assembly basis. In addition, laws and regulations increasingly limit the release into the environment of fugitive emissions of a wide variety of materials and require the monitoring of such emissions. Such laws and regulations typically impose significant fines and other sanctions for failure to comply therewith.

Accordingly, there is a need for a flanged, plastic pipe joint assembly which employs a gasket that, when the flanges are forcibly drawn together, minimizes the uneven distribution of stress around the flanges so as to minimize the likelihood of damage thereto and which controls fugitive emissions and allows for monitoring the release of fugitive emissions, either on a regular or continuous basis.

It is the main object of the present invention to provide a gasket that minimizes the uneven distribution of stress around the flanges from the forcible drawing together of the flanges by fasteners.

It is a further object of the present invention to provide such a gasket wherein a portion of the space between two adjoining flanges of respective pipes at the junction thereof is substantially unoccupied by gasket material.

It is yet another object of the present invention to provide such a gasket for use in a joint assembly that provides for detection and control of fugitive emissions in the joint assembly.

It is yet a further object of the present invention to provide such a gasket for use in a joint assembly that provides for monitoring releases of fugitive emissions into the environment by detecting fugitive emissions in the joint assembly.

It is another object of the present invention to provide such a gasket for use in a joint assembly that provides for selectively introducing inert gas to pressurize the gasket assembly and, thereby, prevent fugitive emissions from leaving the pipe.

It is a further object of the present invention to provide such a gasket for use in a joint assembly that selectively removes fugitive emissions that are detected in the joint assembly, minimizing release thereof into the environment.

It is yet another object of the present invention to provide such a gasket for use in a joint assembly wherein the mating surfaces of the flanges are of different outer diameters, so as to join the pipes on center to maximize laminar flow.

It is yet a further object of the present invention to provide such a gasket that can be used with flanges of different outer diameters.

It is another object of the present invention to provide such a gasket that may be used with a flange having a mating surface that i-s interior of the bolts that hold flanges together.

It is a further object of the present invention to provide such a gasket alignable with respect to the bolts that hold flanges together without gasket material encircling one or more of the bolts.

It is still a further object of the present invention to provide such a gasket that is removably installable in a joint assembly without removal of all bolts holding the assembly together.

It is yet another object of the present invention to provide such a gasket for use in a joint assembly that provides for determining the compression of the gasket installed between two opposed flanges.

It is yet a further object of the present invention to provide such a gasket that provides for readily manipulating the gasket in the installation thereof.

It is another object of the present invention to provide such a gasket that may be used with more than one size bolt pattern, such as different diameter bolt circles.

The aforementionned main object is achieved by a gasket according to claim 1. The further objects are achieved by gaskets according to the dependent claims as well as use of a gasket according to claims 16 to 22.

The foregoing and other objects, features, and advantages of the invention will be more readily understood upon consideration of the following detailed description of the invention, taken in conjunction with the accompanying drawings.

### Brief Description of the Drawings

Figure 1 shows a top view of a conventional flanged pipe joint gasket.

Figure 2 shows a side view of a flanged pipe joint assembly employing a conventional gasket of the type shown in Figure 1.

Figure 3 shows a force diagram for a flanged pipe joint assembly employing a conventional gasket, the force being shown along a line passing through two adjacent bolts of the assembly as shown with respect to a conventional gasket by line A-A in Figure 1.

Figure 4 shows a top view of a gasket according to the present invention.

Figure 5 shows a side view of a flanged pipe joint assembly employing a gasket according to the present invention.

Figure 6 shows a force diagram for a flanged pipe joint assembly employing a gasket according to the present invention, the force being shown along a line passing through two adjacent bolts of the assembly as shown with respect to a gasket according to the present invention by line B-B in Figure 4.

Figure 7 is a graph of pressure on a conventional gasket, the pressure required to seal a gasket made of a preferred gasket material, and pressure on a gasket according to the present invention, as a function of position between two adjacent bolts.

Figure 8 shows a side view demonstrating use of a gasket according to the invention in a flanged pipe joint assembly having a valve assembly attached thereto.

Figure 9 shows a top sectional view of the flanged pipe joint assembly of Figure 8, taken along line 9-9 thereof.

Figure 10 shows an enlarged side view of a portion of the flanged pipe joint assembly of Figure 8, in partial section.

Figure 11 shows a top view of a second embodiment of a gasket having three rings according to the present invention.

Figure 12 shows a top view of a third embodiment of a gasket having an inset outer ring according to the present invention.

Figure 13 shows a top view of a fourth embodiment of a gasket having an inset outer ring and open alignment spokes according to the present invention.

Figure 14 shows a top view of a fifth embodiment of a gasket having a partially rectilinear periphery according to the present invention.

Figure 15 shows a top view of a sixth embodiment of a gasket having a partially rectilinear periphery and open alignment spokes according to the present invention.

Figure 16 shows a top view of a seventh embodiment of a gasket having thickness gauge notches in the outside of an outer ring and corresponding convexities on the inside of the outer ring according to the present invention.

Figure 17 shows a top view of an eigth embodiment of a gasket having an inset outer ring, open alignment spokes, thickness gauge notches and reinforcement spokes between an inner ring and the outer ring at the location of the thickness gauge notches according to the present invention.

Figure 18 shows a top view of a ninth embodiment of a gasket having an inset outer ring, closed alignment spokes, peripheral thickness gauge notches and reinforcement spokes between an inner ring and the outer ring at the location of the thickness gauge notches according to the present invention.

Figure 19 shows a top view of a tenth embodiment of a gasket having an inset outer ring, open alignment spokes, one combined closed alignment spoke and tab, thickness gauge notches and reinforcement spokes between an inner ring and the outer ring at the location of the thickness gauge notches according to the present invention.

Figure 20 shows a top view of a eleventh embodiment of a gasket having an inset outer ring, open alignment spokes, thickness gauge notches in the outside of the outer ring and corresponding convexities on the inside of the outer ring according to the present invention.

Figure 21 shows a top view of a twelfth embodiment of a gasket having an inset outer ring, open alignment spokes, a combined closed alignment spoke and tab, alignment shelves on the open alignment spokes, thickness gauge notches in the outside of the outer ring and reinforcement spokes between an inner ring and the outer ring at the location of the thickness gauge notches according to the present invention.

Figure 22 shows a top view of the embodiment of the gasket of Figure 21 superimposed on two different size flanges.

Figure 23 shows a top view of a thirteenth embodiment of a gasket having an inset outer ring, open alignment spokes, a combined closed alignment spoke and tab, alignment shelves on the alignment spokes, thickness gauge notches in the outside of the outer ring and reinforcement spokes between an inner ring and the outer ring at the location of the thickness gauge notches according to the present invention.

Figure 24 shows a top view of a fourteenth embodiment of a gasket having an inset outer ring, open alignment spokes, a closed alignment spoke, a combined closed alignment spoke and tab, alignment shelves on the alignment spokes, thickness gauge notches in the outside of the outer ring and reinforcement spokes between an inner ring and the outer ring at the location of the thickness gauge notches according to the present invention.

Figure 25 shows a top view of a fifteenth embodiment of a gasket having an outer ring and an inner ring, thickness gauge notches in the outside of the outer ring and reinforcement spokes between the inner ring and the outer ring at the location of the notches according to the present invention.

Figure 26 shows a top view of an sixteenth embodiment of a gasket having an outer ring and an inner ring, thickness gauge notches in the outside of the outer ring and corresponding convexities on the inside of the outer ring according to the present invention.

### Detailed Description of the Invention

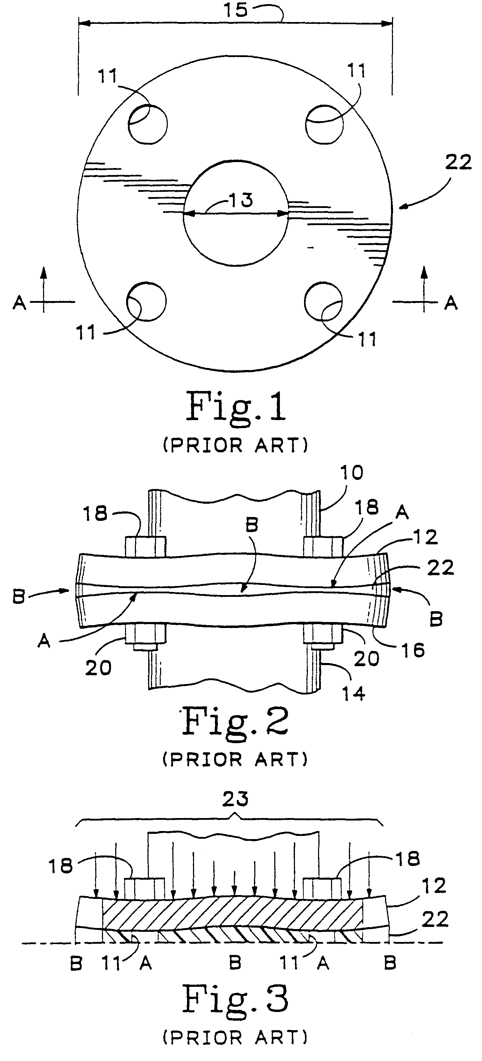

Turning first to Figure 1, a conventional gasket 22 for a flanged pipe joint assembly typically is annular in shape and has a plurality of apertures 11 for receiving bolts or other fasteners. The inside diameter 13 is substantially equal to the inside diameter of a pipe with which the gasket is to be used, and the outside diameter 15 is substantially equal to the outside diameter of a flange with which the gasket is to be used. Such a gasket may be made of a variety of different materials.

A conventional flanged pipe joint assembly is shown in Figure 2, wherein a first pipe 10, having a flange 12, is connected to a second pipe 14, having a flange 16, by a plurality of fasteners. The fasteners are typically bolts 18, disposed in circular apertures (not shown) through flanges 12 and 16, and fastened in place by nuts 20, as is commonly understood in the art. A conventional gasket 22, whose apertures 11 correspond to the apertures in the flanges, is disposed between the flanges.

A similar joint assembly is used to connect a flanged pipe to a blind flange, i.e., a flange for closing off the end of a pipe, and to a nozzle, i.e., a flanged outlet from a tank or other container. As used herein, the term "pipe flange", or just "flange", is intended to comprehend blind flanges and nozzle flanges as well as flanges on the end of a pipe or valve.

As can be seen in Figure 2, when the nuts 20 are tightened onto the bolts 18 so as to forcibly draw the flanges 12 and 16 together, the gasket 22 is compressed in the areas directly beneath the bolts at points A, but resists compression at points B, and thereby causes deformation of the flanges. This is particularly so where the rigidity of the pipe flange is similar to the compressibility of the gasket material, as in the use of PVC, CPVC, FRP, PVDF, PP, and other nonmetallic pipe.

This can be seen more clearly in Figure 3 where one flange 12, made of FRP, and one-half of the conventional gasket 22 is illustrated in a force diagram. The bolts 18 are located at positions A, and the flange is most deformed at positions B. The arrows 23 show a typical distribution of force exerted by the flange 12 on the conventional gasket 22 in a state of equilibrium along a line passing through two adjacent bolts of the assembly. It can be seen that, due to the distribution of forces on the flange 12, shown by the arrows 23, the flange undergoes a bending moment, which can cause the flange to distort and eventually break. Indeed, the flange is substantially distorted at points B.

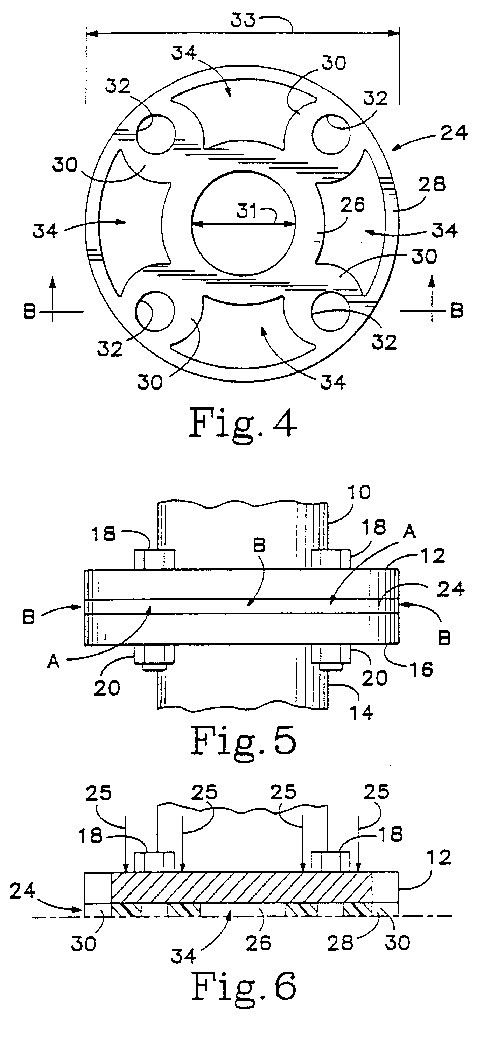

Turning to Figure 4, a joint assembly employing a gasket 24 according to the present invention. Said gasket 24 comprises an inner ring 26, an outer ring 28 and a plurality of spokes 30 extending between the inner ring and the outer ring. The inner ring comprises a strip of material formed in a substantially-continuous, annular loop whose outer periphery is greater in diameter than the inner diameter of the flanges. That is, it must be greater than the inner diameter of the pipes or the nozzle and pipe connected thereto, or the pipe to which a blind flange or valve is connected. The outer ring comprises a strip of material formed in a substantially-continuous, annular loop whose inner periphery is greater in diameter than the outer periphery of the inner ring but less than the diameter of the outer periphery of the flanges. Ordinarily, the inside diameter 31 of the inner ring 26 is substantially equal to the inside diameter of a pipe flange which the gasket is to be used, and the outside diameter 33 of the outer ring 28 is substantially equal to the diameter of the outer periphery of the flanges.

The spokes have apertures 32 therein for receiving bolts, and the spaces 34 between the inner ring, outer ring and spokes preferably are void. For example, about 40 percent of the area between the two flanges may be separated by voids in the gasket. However, it is to be recognized that, rather than making that area entirely void, gasket material significantly thinner than that which forms the inner ring, outer ring and spokes could be used without departing from the principles of the present invention. It is also to be recognized that more than two concentric rings may be used without departing from the principles of the invention.

The gasket may be made of a single substantially flat, relatively chemically inert, compressible, and resilient material such as the synthetic polymer marketed under the trademark TEFLON by E.I. DuPont De Nemours and Company. Preferably, it is made of the product marketed by W. L. Gore & Associates under the trademark GORE-TEX GR SHEET.
However, it is to be recognized that other gasket material may be used without departing from the principles of the invention.

There are some important characteristics of preferred gasket or sealing material. One such characteristic is that the gasket material has a hardness less than at least one flange so that the gasket material compresses when the flanges are drawn together and expands to maintain a seal when the space between the flanges increases. Preferably, the gasket material should have a durometer less than 95, as measured by a durometer having a Shore A scale ranging from zero to one hundred. It has been found that material having a durometer of about 55-70 works particularly well with PVC, CPVC, FRP, PVDF, PP and other nonmetallic pipe flanges. Another desirable characteristic of the material is that it has the property of compressing in the direction of applied compressive force without substantial expansion lateral thereto.

When the gasket 24 is placed in a joint assembly, as shown in Figure 5, those portions of the flanges 12 and 16 which are disposed adjacent the void spaces 34 do not experience any resistance to movement in the direction of one another and do not experience significant bending moments. Rather, the gasket as a whole generally becomes evenly compressed and the flanges 12 and 16 are not distorted.

Thence, the force diagram for the pipe joint assembly employing a gasket according to the present invention is shown in Figure 6. Only one flange, made of FRP, and one-half of the gasket 24 are shown. The arrows 25 illustrate the distribution of force exerted by the flange 12 on the gasket 24 of the invention in a state of equilibrium along a line passing through two adjacent bolts of the assembly. As can be seen, there is no significant distortion of the flanges at points B.

In reality, even with the gasket 24, there is likely to be some distortion of the flanges at the periphery thereof. In applications using gasket 24, this is due to the presence of the outer ring 28. However, there should be very little distortion in comparison to the use of the conventional gasket shown in Figure 1. Since the inner ring of gasket 24 is located adjacent the openings of pipes 10 and 14, there will be virtually no distortion in that area, as a practical matter. In any event, the bending moments and distortion of the flanges is greatly reduced relative to use of conventional gaskets, and the reliability of the joint assembly is thereby greatly enhanced by the use of the gasket according to the present invention.

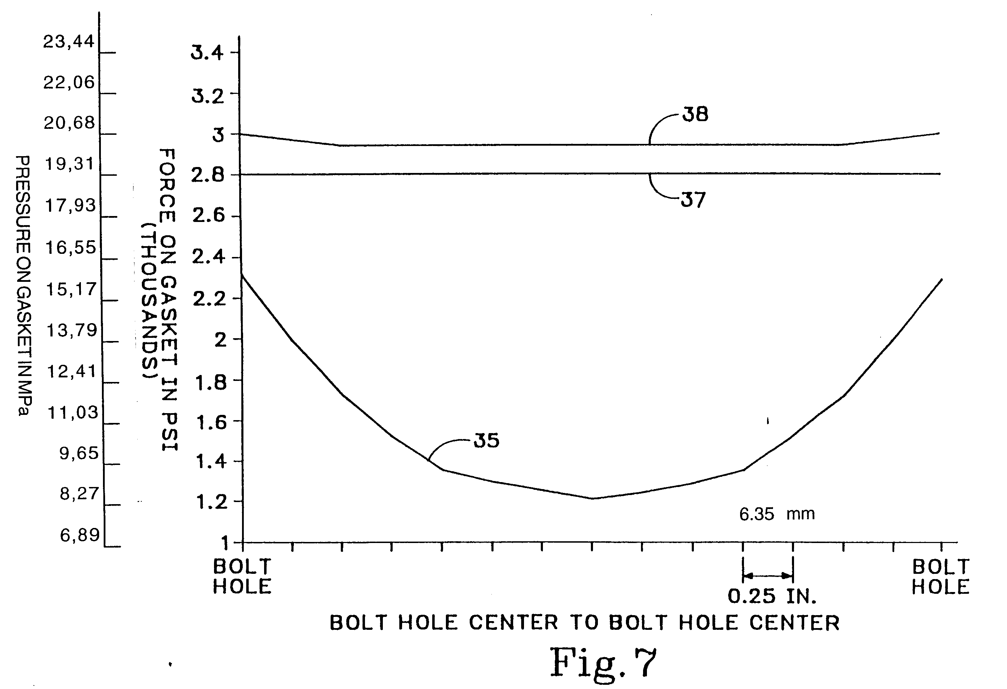

An advantage of a gasket according to the present invention is that a greater amount of pressure can be applied by the fastening bolts than with the use of a conventional gasket. Figure 7 shows, at line 35, a graph of the maximum pressure that can ordinarily be applied with a conventional gasket made of GORE-TEX GR SHEET material, as a function of position between two adjacent bolts, the marks along the horizontal axis representing 6.35 mm (0.25 inch) increments of distance for a 15,24 cm (6 inch) diameter flange. It can be seen that, while a maximum pressure of about 15,85 MPa (2300 psi) may be applied at the bolts, that results in only about 8,96 -10,34 MPa (1300-1500 psi) over most of the distance between the bolts.

Line 37 shows the minimum pressure that must be applied to guarantee a seal using GORE-TEX GR SHEET material. This material is highly desirable to use because of its chemically inert property. Yet, that amount of pressure cannot be applied to a gasket of conventional design without damaging the flanges because of the non-uniform distribution of pressure and resulting distortion of the flanges.

Line 38 shows a graph of pressure applied with a gasket according to the present invention. GORE-TEX GR SHEET material allows a pressure in excess of 20,68 MPa (3000 psi) at the bolts, and the gasket of the present invention distributes the pressure more evenly over the portions of the flanges between the bolts and over the rings. In the example shown, the minimum pressure between the bolts is about 20,30 MPa (2945 psi.). As a result, a much more effective seal can be achieved by the gasket of the present invention. In particular, due to the minimal distortion of the flanges, sufficient pressure can be applied to guarantee a seal initially.

In addition, an important feature of the multi-ring gasket of the present invention is that if the inner ring ruptures, the outer ring still prevents hazardous material from escaping until the gasket can be replaced.

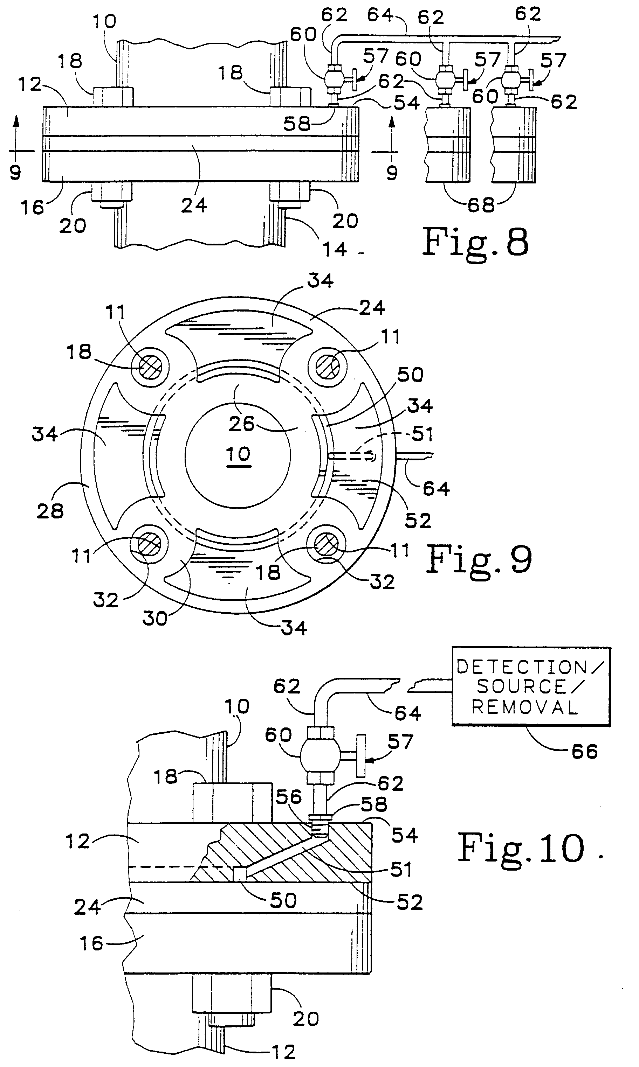

Turning to Figures 8, 9 and 10, an alternative embodiment of a joint assembly employing a gasket according to the present invention includes a groove 50 and a channel 51 formed in at least one flange 12 or 16. The groove 50 is disposed in an inside surface 52 of the respective flange 12 or 16 adjacent the gasket 24, between the outer periphery of the gasket's inner ring 26 and the inner periphery of the gasket's outer ring 28. As shown in Figure 9, the groove 50 preferably is disposed so as to be in communication with the gasket's spaces 34 but not with either the apertures 11 through the flanges 12 and 16, the fasteners inserted therein or the apertures 32 of the gasket's spokes 30. The groove 50 preferably is annular, although other shapes may be used without departing from the principles of the invention.

The channel 51 is disposed through the respective flange 12 or 16 and is in communication, at the first end thereof, with the groove 50 and, at the second end thereof, with an outside surface 54 of the flange. The channel 51 has a port 56 disposed at the second end thereof. The port 56 has shape and dimensions selected so as to connect a tapping mechanism 57 thereto, the tapping mechanism 57 providing for selective transmission of fluids or other materials into or out of the channel 51 and groove 50, or for detection of fluids or materials therein, or both. Preferably, the port 56 comprises a cylindrical aperture of predetermined diameter and depth so that the tapping mechanism 57 may be connected by a fitting 58 inserted in the port 56. As shown, the fitting 58 is threaded so as to self-tap into the port 56, forming a seal that substantially prevents release of fluids or other materials into the environment. It is to be recognized, however, that the tapping mechanism 57 may be connected using means other than a self-tapping fitting, without departing from the principles of the invention.

The mechanism 57, in one embodiment, comprises a valve 60 and tubing 62. The valve 60 is connected to the fitting 58 and to a main tube 64 by tubing 62. The valve 60 may be adjusted to transmit fluids and other materials selectively into or out of the channel 51 and the groove 50 through the tubing 62 and the main tube 64. The main tube 64 preferably is connected to a device 66 that detects, sources, or removes fluids or other materials in the groove 50 and channel 51, or performs some combination thereof, operating in combination with the tapping mechanism 57. Although, as shown, the tapping mechanism 57 and the device 66 are separate, it is to be recognized that they may be a single unit without departing from the principles of the invention. It is preferred, however, to have the device 66 separate so as to connect thereto, by one or more main tubes 64, a plurality of joint assemblies 68, each having a respective tapping mechanism 57, as shown in Figure 8. It is also preferred that each tapping mechanism 57 and the device 66 are individually controlled from a central location so that each joint assembly 68 can be monitored for fugitive emissions individually and substantially continuously. In this manner, the device 66 may selectively (i) source fluids or other materials, such as inert gas, to pressurize the gasket 24, either to prevent fugitive emissions from entering the gasket or to drive any emissions present back into the pipe 10, (ii) provide a pressure gradient so as to remove fluids or other materials, including fugitive emissions, from the gasket 24 through the tapping mechanism 57, tubing 62 and main tube 64, (iii) detect fugitive emissions, for example by detecting the pressure or changes in pressure within the joint assembly, (iv) detect the pressure of the fluids or other materials introduced into the joint assembly, or (v) combinations of the above.

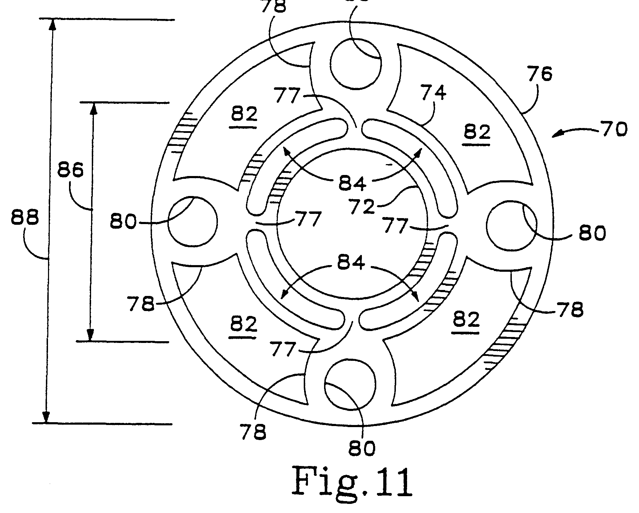

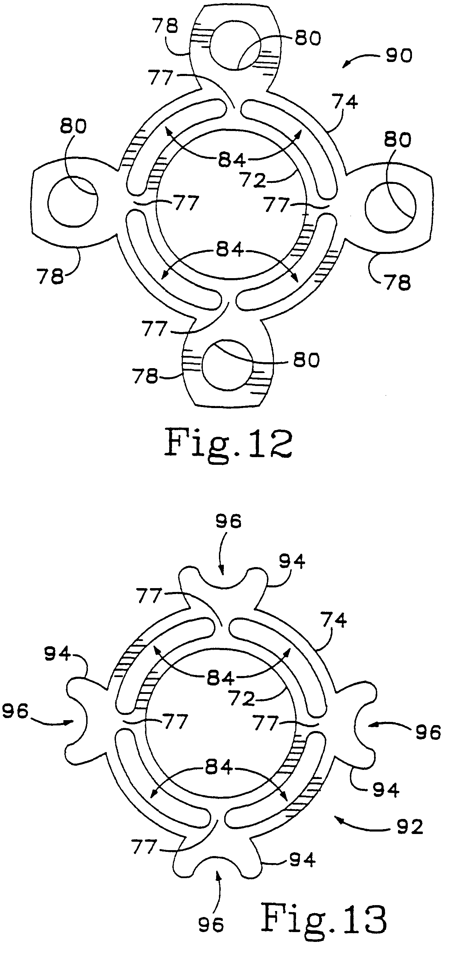

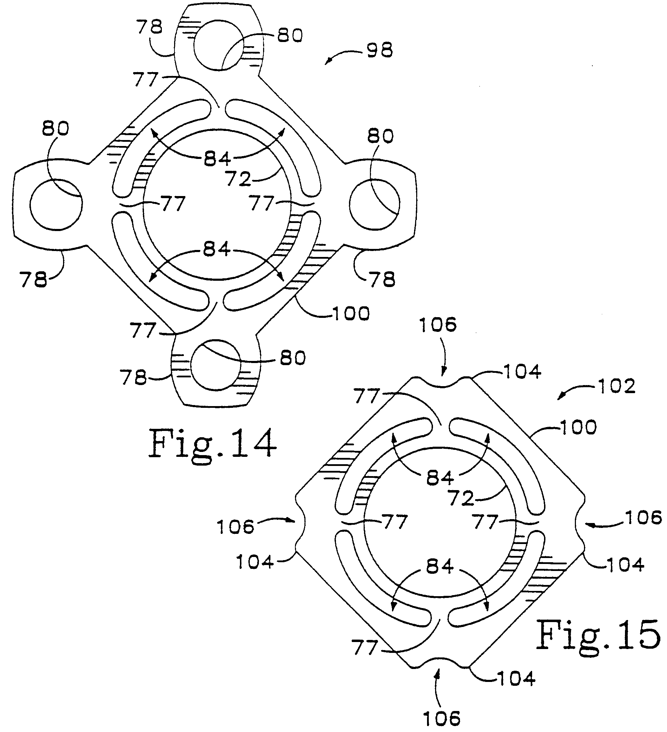

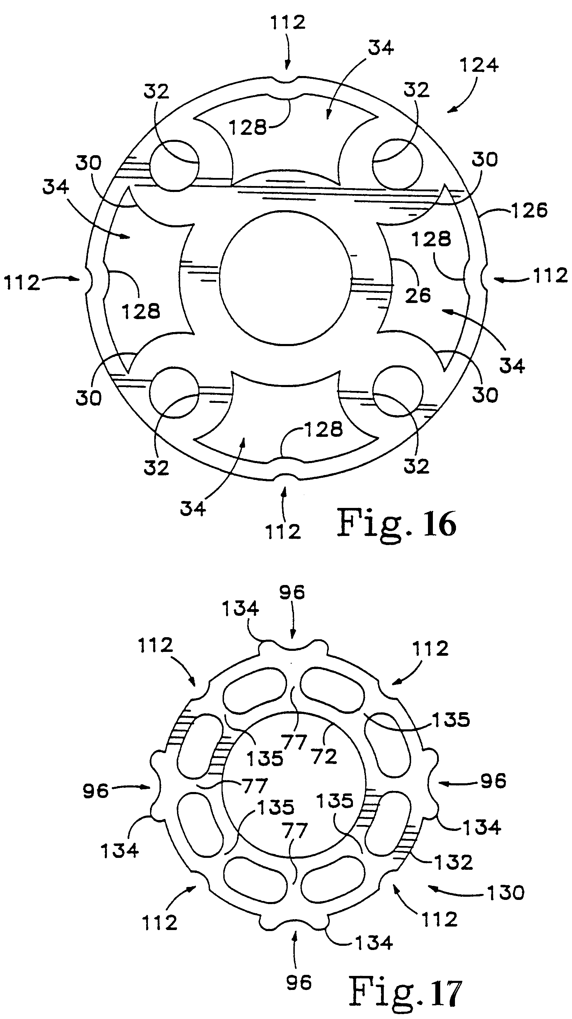

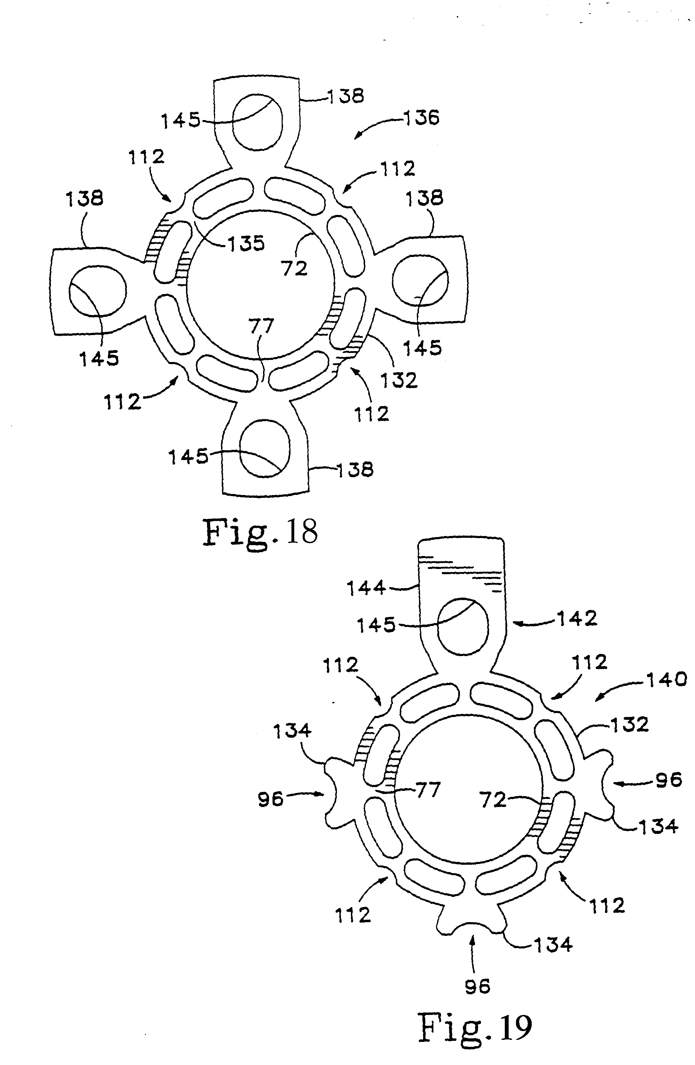

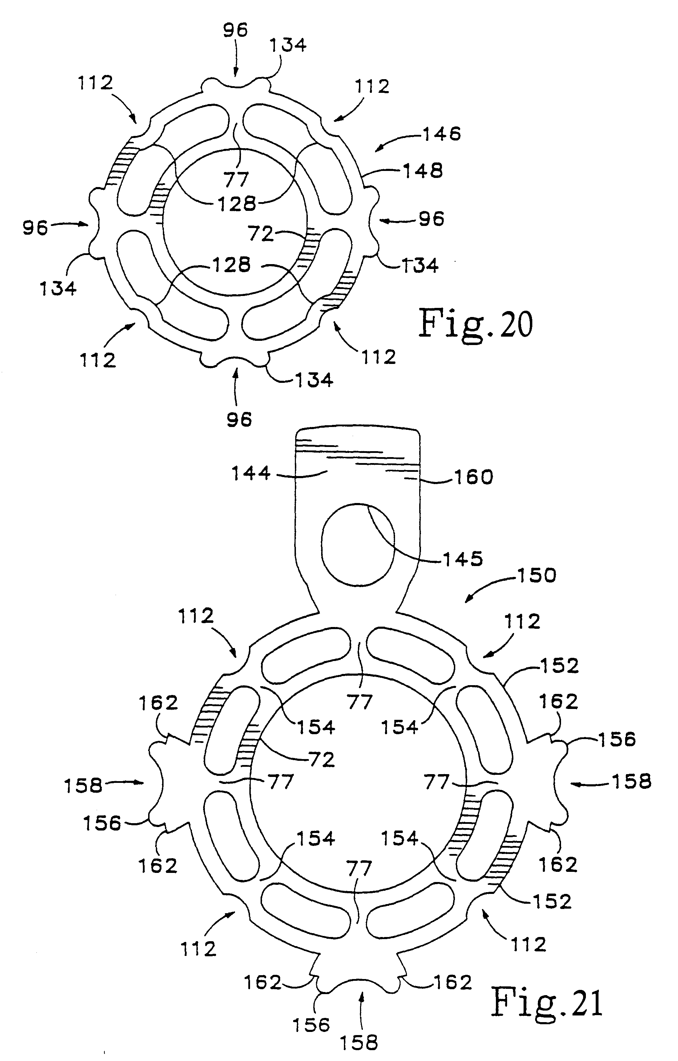

A number of additional embodiments of the gasket according to the present invention are shown in Figures 11 through 26. These embodiments introduce several further features, including: three ring gasket for use with more than one size of flange (Fig.11); a gasket having a substantially inset outermost ring for use with a flange whose mating surface is interior of the bolts that hold two flanges together (Fig.12); a gasket having open alignment spokes that do not encircle the bolts that hold two flanges together (Fig.13); a gasket having an outer periphery that is at least partially rectilinear (Fig. 14, 15); gaskets having one or more peripheral notches for receiving a thickness gauge to measure the spacing between two opposed flanges so as to determine the compression of the installed gasket (Fig.16 - Fig.20); gaskets having shelves adjacent the alignment spokes to align the gasket with more than one size flange (Fig. 21 - 24); gaskets having a tab for manipulating the gasket in the installation thereof (Fig. 18, 19, 21 - 24); and; a gasket having one or more closed alignment spokes that include apertures for receiving bolts, the apertures being radially elongate so as to accommodate different size bolt patterns, such as different diameter bolt circles (Fig. 18, 19, 21 - 24).

Referring to Figure 11, a gasket 70 for use with more than one size of flange comprises an inner ring 72, a first outer ring 74, a second outer ring 76, a plurality of inner spokes 77 extending between the inner ring 72 and the first outer ring 74 and a plurality of spokes 78 extending between the first outer ring 74 and the second outer ring 76. The alignment spokes 78 have apertures 80 therein for receiving bolts. The spaces 82 between the first outer ring 74, the second outer ring 76, and the alignment spokes 78 are void.
The spaces 84 between the first outer ring 74, the inner ring 72, and the inner spokes 77 are also void. The outside diameter 86 of the first outer ring 74 is substantially equal to the diameter of the outer periphery of a first selected flange. The outside diameter 88 of the second outer ring 76 is substantially equal to the diameter of the outer periphery of a second selected flange. Hence, the gasket 70 can be used with the first flange or the second flange.

Figure 12 shows a third gasket embodiment 90. It is substantially similar to the embodiment of Figure 11, except that it has no second outer ring and, thereby, has an outermost ring that, in use, is substantially inset from the bolts surrounding the gasket.

Figure 13 shows a fourth gasket embodiment 92. It is substantially similar to the third gasket embodiment 90, except that it has open alignment spokes 94, thereby providing alignment concavities 96 which, in use, are placed adjacent, including resting against, the bolts surrounding the gasket. Open alignment spokes 94 also generally provide for removably installing the gasket 92 in a joint assembly without removal of all such bolts; for this gasket embodiment 92 only as many as half the bolts need to be removed in an installation.

A fifth gasket embodiment 98 is shown in Figure 14. Gasket 98 is substantially similar to gasket 90 in Figure 12, except that gasket 98 has an outer ring 100 whose periphery is partially rectilinear. More particularly, gasket 98 has a square periphery except for the alignment spokes 78, though it is to be recognized that other rectilinear shapes, or substantial polygons, could be used.

A sixth gasket embodiment 102, shown in Figure 15, is. substantially similar to the gasket 98 shown in Figure 14, except that it has open alignment spokes 104, which define respective open alignment concavities 106.

A seventh gasket embodiment 124 is shown in Figure 16. Gasket 124 is substantially similar to gasket 24 in Figure 4, except that the outer ring 126 of gasket 124 has notches 112 in the outside thereof and corresponding convexities 128 on the inside thereof. The notches 112, as previously described, are for receiving thickness gauges. The convexities 128 maintain the strength of the outer ring 126 at the locations of the notches 112.

The eighth gasket embodiment 130, shown in Figure 17, is substantially similar to the gasket 92 in Figure 13 in that it has an inset outer ring 132, inner ring 72, inner spokes 77 and open alignment spokes 134 defining alignment concavities 96, while having notches 112 in the outside of its outermost ring, ring 132. In addition to the open alignment spokes 134 and inner spokes 77, gasket 130 also has reinforcement spokes 135 disposed at the locations of the notches 112 so as to extend between the inner ring 72 and the outer ring 132, thereby maintaining the strength of the gasket at the notches 112. While the open alignment spokes 134 as shown are somewhat shorter than the open alignment spokes 94 shown in Figure 13, for instance to accommodate a larger diameter flange, it is to be recognized that the open alignment spokes 134 may be of any length suitable for the installation.

Figure 18 shows a nineth gasket embodiment 136. It has closed alignment spokes 138 having apertures 145 therein for receiving bolts. The apertures 145 preferably are radially elongate so as to accommodate bolts having various dispositions relative to the flanges, i.e., having different size bolt patterns, such as different diameter bolt circles.

Figure 19 shows a tenth gasket embodiment 140. It has open alignment spokes 134 and one combined closed alignment spoke 142 and tab 144. The tab 144 preferably extends well beyond the bolts so that it can be used to manipulate, position and align the gasket 140 during installation. Spoke 142 has an aperture 145 which, as previously described, preferably is radially elongate. The tab portion may include identification data disposed thereon.

The eleventh gasket embodiment 146 shown in Figure 20 is substantially similar to the gasket 92 shown in Figure 13 in that it has an inset outer ring 148 with notches 112 in the outside thereof and corresponding convexities 128 on the inside thereof, and has open alignment spokes 134.

The twelfth gasket embodiment 150 shown in Figure 21 is a two ring gasket which combines the features of an inset outer ring 152, an inner ring 72, inner spokes 77, notches 112 in the outside of the outer ring 152, reinforcement spokes 154 disposed between the inner ring 72 and the outer ring 152 at the locations of the notches 112, open alignment spokes 156 defining alignment concavities 158, and one combined closed alignment spoke 160 and tab 144. The closed alignment spoke 160 has an aperture 145 which, as previously described, preferably is radially elongate. The gasket 150 also has pairs of centering shelves 162, each associated with a respective alignment spoke 156 or 160.

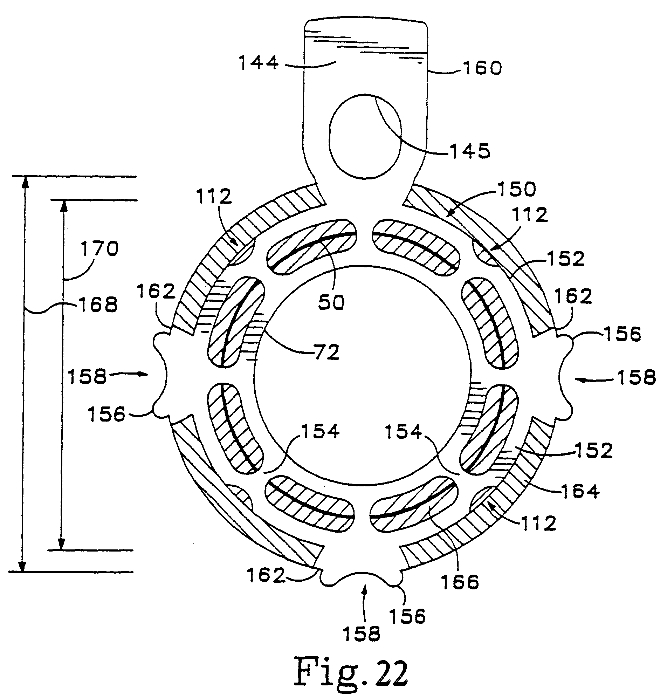

In Figure 22, gasket 150 is shown superimposed on two different, concentrically illustrated flanges, 164 and 166, having outer diameters 168 and 170, respectively. The outside diameter of the outer ring 152 of gasket 150 is substantially equal to the diameter 170 of the flange 166. The diameter of a circle defined by the shelves 162 is substantially equal to the diameter 168 of the flange 164. Consequently, gasket 150 can be centered to either size flange, either by the outside of the gasket's outer ring 152 or by the centering shelves 162, depending on which size flange is being used. Flange 166 also includes a groove 50, which has pressure equal to that within the voids between ring 72 and ring 152.

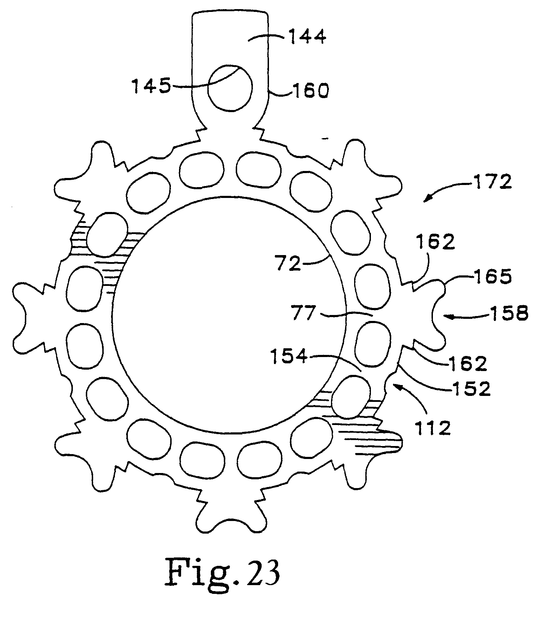

The thirteenth gasket embodiment 172 shown in Figure 23 is substantially similar to the gasket 150 of Figure 21, except that it includes a greater plurality of (i) open alignment spokes 156, and associated concavities 158, centering shelves 162 and inner spokes 77, and (ii) notches 112, and associated reinforcement spokes 154. It is to be recognized that any number of alignment spokes, together with associated structure, and whether the spokes are open or closed, may be used, without departing from the principles of the invention, provided that number is suitable for the installation. It is also to be recognized that any number of notches 112, and associated structure, may be used without departing from the principles of the invention, provided that number allows for measuring gasket thickness in a manner suitable for the installation.

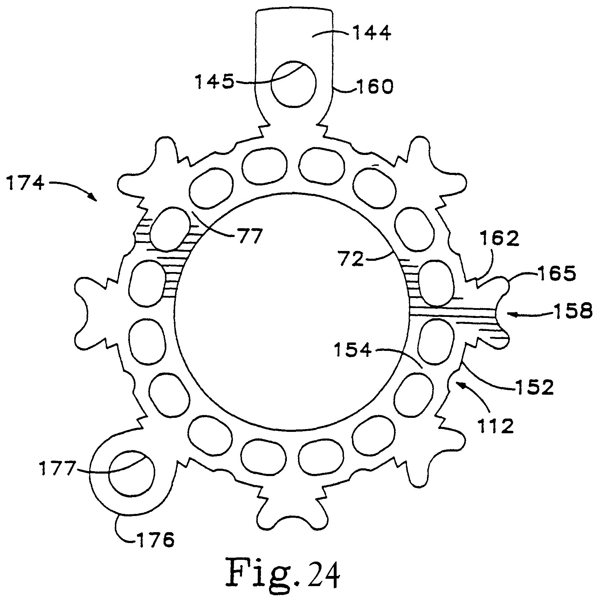

The fourteenth gasket embodiment 174 shown in Figure 24 is substantially similar to the gasket 172 of Figure 23, except that it replaces one of the plurality of open alignment spokes 156 with a closed alignment spoke 176, the spoke 176 being shown without a tab 144 but having an aperture 177 for receiving a bolt. Closed alignment spoke 176 serves as a pivot for gasket 174 when it is being aligned by manipulation of the tab 144.

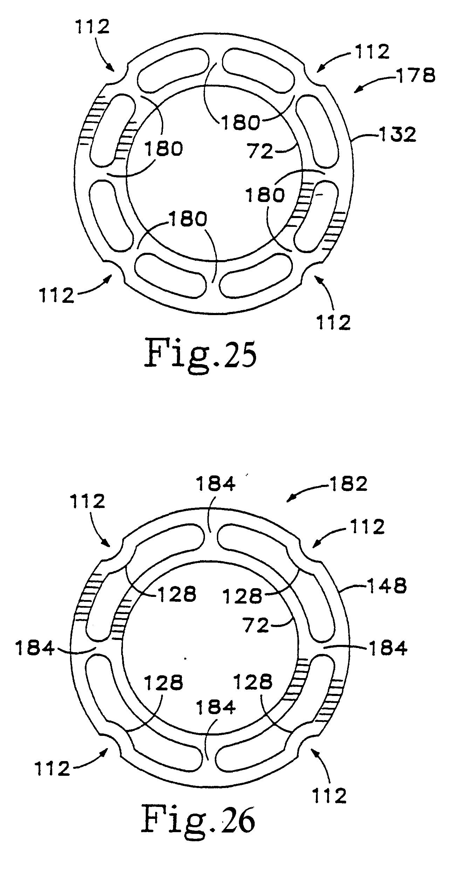

The fifteenth gasket embodiment 178 shown in Figure has spokes 180 which are not adapted for alignment. The sixteenth embodiment 182 shown in Figure 26 is substantially similar to the gasket 146 in Figure 20, except that its spokes 184 are not adapted for alignment. Both gasket 178 and gasket 182 are for use in a connection where the fasteners, such as bolts, lie entirely outside the outer ring of the gasket.

The terms and expressions which have been employed in the foregoing specification are employed therein as terms of description and not of limitation, it being recognized that the scope of the invention is defined and limited only by the claims which follow.

## Claims

1. A gasket (24, 70, 90, 96, 98, 102, 124, 130, 136, 140, 146, 150, 172, 174, 178, 182) for providing a seal at the joint between a pair of pipe flanges (12, 16) for connecting one flange to the other, said flanges (12, 16) having an inner periphery of known size and shape and an outer periphery of known size and shape, and a plurality of fasteners (18) disposed around said flanges, comprising:
a) a first strip (26, 72) of sealing material serving as seal engagement surface in a joint flange assembly, said first strip (26, 72) being formed in a continuous loop having a predetermined shape, said first strip (26, 72) having an outer periphery whose size is greater than the size of the inner periphery of said flanges;
b) a second strip (28, 74, 100, 126, 132, 148, 152) of said sealing material serving as seal engagement surface in a joint flange assembly, said second strip being formed in a continuous loop having a predetermined shape, said second strip (28, 74, 100, 126, 132, 148, 152) having an inner periphery whose size is greater than said outer periphery of said first strip (26, 72) and less than the size of the outer periphery of said flanges (12, 16);
c) a plurality of spokes (30, 77, 180, 184) of said sealing material, each disposed between and attached to said first strip (26, 72) and said second strip (28, 74, 100, 126, 132, 148, 152), and extending between said first strip (26, 72) and said second strip (28, 74, 100, 126, 132, 148, 152),
said sealing material being resilient and the hardness of said sealing material being less than the hardness of at least one of the flanges so that said sealing material compresses when the flanges are drawn together and expands to maintain a seal when the space between the flanges increases,
wherein said first strip (26, 72), said second strip (28, 74, 100, 126, 132, 148, 152) and said spokes (30, 77, 180, 184) comprise a single substantially flat piece of material,
and that the spaces (34, 84) between said first strip (26, 72), said second strip (28, 74, 100, 126, 132, 148, 152) and said plurality of spokes (30, 77, 180, 184) are void or employ gasket material significantly thinner than that which forms said first strip (26, 72), said second strip (28, 74, 100, 126, 132, 148, 152) and said plurality of spokes (30, 77, 180, 184).

2. The gasket of claim 1, wherein said gasket (70) further comprises a third strip (76) of said sealing material formed in a substantially-continuous loop having a predetermined shape and having a diameter larger than the diameter of the loops formed by the first and second strips (72, 74), with the outside diameter (86) of the second strip (74) being substantially equal to the diameter of the outer periphery of a first selected flange and the outside diameter (88) of the third strip (76) being substantially equal to the diameter of the outer periphery of a second selected flange, and another plurality of spokes (78) of said sealing material extending between said third strip (76) and said second strip (74) wherein remaining spaces (82) between said second strip (74), said third strip (76) and said another plurality of spokes (78) are void or filled with material significantly thinner than that which forms the first to third strip (72, 74, 76), said plurality of spokes (77) and said another plurality of spokes (78).

3. The gasket (92, 102, 130, 140, 146, 150) of claim 1, further comprising open alignment spokes (94, 104, 134, 156, 165) of said sealing material attached to said second strip (74,100, 132, 148, 152) so as to extend outwardly therefrom, said open alignment spokes (94, 104, 134, 156, 165) defining an alignment concavity (96,106, 158) for placement adjacent a fastener.

4. The gasket (136, 140, 150, 172, 174) of claim 1 or 3, further comprising at least one closed alignment spoke (138,142, 160) of said sealing material extending outwardly from said second strip (132, 152), wherein said at least one closed alignment spoke (138, 142, 160) includes an aperture (145) therethrough for receiving a bolt.

5. The gasket (140, 150, 172, 174) of claim 4, wherein said closed alignment spoke (142, 160) has a tab portion (144) that extends beyond the outer peripheries of the flanges (12, 16).

6. The gasket according to claim 5, wherein said tab portion includes identification data disposed thereon.

7. The gasket (150, 172, 174) of any of claims 3 to 5, further comprising a centering shelf (162) of said sealing material depending from said open alignment spoke (156, 165) and extending so as to be substantially congruent with the outer periphery of at least one of the flanges (12, 16).

8. The gasket ( 98, 102) of claim 1, wherein said outer periphery of said first strip (72) is substantially circular and said outer periphery of said second strip (100) is substantially square.

9. The gasket (102) of claim 8, wherein said outer periphery of said second strip (100) defines a concavity (106) at a respective corner thereof.

10. The gasket (124, 130, 136, 140, 146, 150, 172, 174, 178, 182) of claim 1 or any of claims 3 to 9 wherein the outer periphery of said second strip (126, 132, 148, 152) includes a concave notch (112), for receiving a thickness gauge.

11. The gasket (124, 146, 182) of claim 10, wherein the outer periphery of said second strip (126, 148) also includes, adjacent said notch (112), a corresponding convexity (128) adapted for substantially maintaining the strength of said second strip at the location of said notch.

12. The gasket (130, 136, 140, 150, 172, 174, 178) of claim 10, further comprising a reinforcement spoke (135, 154, 180) extending between said first strip (72) and said second strip (132, 152) and connecting to said second strip proximate the location of said notch (112).

13. The gasket (24, 70, 124) of claim 1 or 2 or 10, wherein said spokes (30, 77) have respective apertures (32, 80) therein for receiving elongate members of said fasteners (18).

14. The gasket (24, 70, 90, 96, 98, 102, 124, 130, 136, 140, 146, 150, 172, 174, 178, 182) of any of the preceding claims, wherein said first strip (26, 72), said second strip (28, 74, 100, 126, 132, 148, 152) and said spokes (30, 77, 180, 184) are made of a chemically inert and compressible material.

15. Use of a gasket (24, 70, 90, 96, 98, 102, 124, 130, 136, 140, 146, 150, 172, 174, 178, 182) according to any of claims 1 - 14 in an assembly comprising:
said gasket (24, 70, 90, 96, 98, 102, 124, 130, 136, 140, 146, 150, 172, 174, 178, 182);
a first flange (12);
a second flange (16) disposed substantially adjacent and parallel to said first flange (12) and having said gasket (24, 70, 90, 96, 98, 102, 124, 130, 136, 140, 146, 150, 172, 174, 178, 182) disposed therebetween, thereby defining a joint, said second flange (16) having a channel (51) in communication with an inside and an outside surface thereof and said second flange (16) having a groove (50) disposed in said inside surface (52) and a channel (51) in communication, at one end thereof, with said groove (50) and, at the other end thereof, with said outside surface (54) of said second flange (16).

16. Use according to claim 15, wherein said fasteners (18) comprise bolts disposed through apertures in said flanges (12, 16) and said spokes (30) of said gasket (24), and nuts (20) threaded onto said bolts.

17. Use according to claims 15 or 16, wherein said channel (51) is connected to a tapping mechanism (57).

18. Use according to any of claims 15 to 17, wherein said channel (51) is connected to means (66) for detecting fluids.

19. Use according to any of claims 15 to 18, wherein said channel (51) is connected to means (66) for sourcing fluids.

20. Use according to any of claims 15 to 19, wherein said channel (51) is connected to means (66) for sourcing fluids., wherein said channel (51) is connected to means (66) for removing fluids.

21. Use according to any of claims 15 to 20, wherein at least one of said flanges (12, 16) is made of polyvinylchloride, chlorinated polyvinylchloride, fiberglass-reinforced plastic, polyvinylidene fluoride or polypropylene.

## Patentansprüche

1. Eine Dichtung (24, 70, 90, 96, 98, 124,, 130, 102, 136, 140, 146, 150, 172, 174, 178, 182) zum Bereitstellen einer Abdichtung an der Verbindungsstelle zwischen einem Paar Rohrflansche (12, 16) zum Verbinden des einen Flansches mit dem anderen, wobei die Flansche (12, 16) eine innere Peripherie bekannter Größe und Form, sowie eine äußere Peripherie bekannter Größe und Form aufweisen, und eine Vielzahl von Befestigungselementen (18) rund um diese Flansche angebracht ist, die umfaßt:
a) Einen ersten Streifen (26, 72) aus Dichtungsmaterial, das als Dichtungsüberdeckung in einer Flanschverbindungsanordnung dient, wobei der erste Streifen (26, 72) in einer kontinuierlichen Schleife einer vorbestimmten Form ausgebildet ist, der erste Streifen (26, 72) eine äußere Peripherie aufweist, deren Größe größer ist als die Größe der inneren Peripherie der Flansche;
b) einen zweiten Streifen (28, 74, 100, 126, 132, 148, 152) aus Dichtungsmaterial, das als Dichtungsüberdeckung in einer Flanschverbindungsanordnung dient, wobei der zweite Streifen in einer kontinuierlichen Schleife einer vorbestimmten Form ausgebildet ist, der zweite Streifen (28, 74, 100, 126, 132, 148, 152) eine innere Peripherie aufweist, deren Größe größer ist als die Größe des äußeren Streifens (26, 72) und kleiner als die Größe der äußeren Peripherie der Flansche (12, 16);
c) eine Vielzahl von Speichen (30, 77, 180, 184) aus dem Dichtungsmaterial, von denen eine jede zwischen dem ersten Streifen (26, 72) und dem zweiten Streifen (28, 74, 100, 126, 132, 148, 152) angeordnet ist und an diesem ersten Streifen (26, 72) und dem zweiten Streifen (28, 74, 100, 126, 132, 148, 152) befestigt ist, und sich zwischen dem ersten Streifen (26, 72) und dem zweiten Streifen (28, 74, 100, 126, 132, 148, 152) erstreckt,
das Dichtungsmaterial elastisch federnd ist und die Härte des Dichtungsmaterials kleiner ist als die Härte mindestens eines der Flansche, so daß das Dichtungsmaterial zusammengedrückt wird, wenn die Flansche zusammengezogen werden, und sich ausdehnt um eine Abdichtung beizubehalten, wenn sich der Raum zwischen den Flanschen vergrößert,
worin der erste Streifen (26, 72), der zweite Streifen (28, 74, 100, 126, 132, 148, 152) und die Speichen (30, 77, 180, 184) aus einem einzigen, im wesentlichen flachen Materialstück bestehen,
und die Räume (34, 84) zwischen dem ersten Streifen (26, 72), dem zweiten Streifen (28, 74, 100, 126, 132, 148, 152) und der Vielzahl Speichen (30, 77, 180, 184) leer sind oder Dichtungsmaterial beinhalten, das signifikant dünner ist als das, welches den ersten Streifen (26, 72), den zweiten Streifen (28, 74, 100, 126, 132, 148, 152) und die Vielzahl Speichen(30, 77, 180, 184) bildet.

2. Die Dichtung gemäß Anspruch 1, wobei die Dichtung (70) ferner einen dritten Streifen (76) des Dichtmaterials enthält, der in einer im wesentlichen kontinuierlichen Schleife mit einer vorgegebenen Form ausgebildet ist und einen Durchmesser aufweist, der größer ist als die Durchmesser der Schleifen, gebildet aus dem ersten und dem zweiten Streifen (72, 74), wobei der Außendurchmesser (86) des zweiten Streifens (74) im wesentlichen gleich ist dem Durchmesser der äußeren Peripherie eines ersten gewählten Flansches, und der Außendurchmesser (88) des dritten Streifens (76) im wesentlichen gleich ist dem Durchmesser der äußeren Peripherie des zweiten gewählten Flansches, und eine andere Vielzahl Speichen (78) aus dem Dichtmaterial sich zwischen dem dritten Streifen (76) und dem zweiten Streifen (74) erstreckt, wobei die restlichen Räume (82) wischen dem zweiten Streifen (74), dem dritten Streifen (76) und der anderen Vielzahl Speichen (78) leer sind oder mit einem Material gefüllt sind, das signifikant dünner ist als das, das den ersten bis dritten Streifen (72, 74, 76), die Vielzahl Speichen (77), und die andere Vielzahl Speichen (78) füllt.

3. Die Dichtung (92, 102, 130, 140, 146, 150) gemäß Anspruch 1, ferner enthaltend offene Einrichtspeichen (94, 104, 134, 156, 165) aus Dichtmaterial, das am zweiten Streifen (74, 100, 132, 148, 152) befestigt ist, so daß es sich davon nach außen erstreckt, wobei die offenen Einrichtspeichen (94, 104, 134, 156, 165) eine Einricht-Austiefung (96, 106, 158) zur Plazierung anliegend an ein Befestigungselement definieren.

4. Die Dichtung (136 140, 150, 172, 174) gemäß Anspruch 1 oder 3, ferner enthaltend mindestens eine geschlossene Einrichtspeiche (138, 142, 160) des Dichtmaterials, das sich vom zweiten Streifen (132, 152) aus nach außen erstreckt, wobei diese mindestens eine geschlossene Einrichtspeiche (138, 142, 160) eine Öffnung (145) zur Aufnahme einer Schraube aufweist.

5. Die Dichtung (140, 150, 172, 174) gemäß Anspruch 4, in der die geschlossene Einrichtspeiche (142, 160) einen Zungenteil (144) aufweist, der sich über die Außenperipherien der Flansche (12, 16) hinaus erstreckt.

6. Die Dichtung gemäß Anspruch 5, in der der Zungenteil darauf angebrachte Identifikationsdaten enthält.

7. Die Dichtung (150, 172, 174) eines beliebigen der Ansprüche 3 bis 5, ferner enthaltend einen Zentrierrand (162) des Dichtmaterials, abhängig von der offenen Einrichtspeiche (156, 165) und sich erstreckend, so daß er im wesentlichen mit der äußeren Peripherie mindestens eines der Flansche (12, 16) kongruent ist.

8. Die Dichtung (98, 102) gemäß Anspruch 1, in der die äußere Peripherie des ersten Streifens (72) im wesentlichen kreisförmig ist und die äußere Peripherie des zweiten Streifens (100) im wesentlichen quadratisch ist.

9. Die Dichtung (102) gemäß Anspruch 8, in dem die äußere Peripherie des zweiten Streifens (100) eine Austiefung (106) an einer entsprechenden Ecke desselben definiert.

10. Die Dichtung (124, 130, 136, 140, 146, 150, 172, 174, 178, 182) gemäß Anspruch 1 oder einem der Ansprüche 3 bis 9, in der die äußere Peripherie des zweiten Streifens (126, 132, 148, 152) eine konkave Kerbe (112) zur Aufnahme einer Dickenlehre beinhaltet.

11. Die Dichtung (124, 146, 182) gemäß Anspruch 10, in der die äußere Peripherie des zweiten Streifens (126, 148) anliegend an die Kerbe (112) auch eine entsprechende Ausbauchung (128) enthält, die angepaßt ist, um im wesentlichen die Stärke des zweiten Streifens am Ort der Kerbe zu bewahren.

12. Die Dichtung (130, 136, 140, 150, 172, 174, 178) gemäß Anspruch 10, ferner enthaltend eine Verstärkerspeiche (135, 154, 180), die sich zwischen dem ersten Streifen (72) und dem zweiten Streifen (132, 152) erstreckt und sich in der Nähe des Ort der Kerbe (112) mit dem zweiten Streifen verbindet.

13. Die Dichtung (24, 70, 124) gemäß Anspruch 1 oder 2 oder 10, in dem die Speichen (30, 77) entsprechende Öffnungen (32, 80) aufweisen, um längsgestreckte Glieder der Befestigungselemente (18) aufzunehmen.

14. Die Dichtung (24, 70, 90, 96, 98, 102, 124, 130, 136, 140, 146, 150, 172, 174, 178, 182) gemäß einem beliebigen der vorstehenden Ansprüche, in dem der erste Streifen (26, 72), der zweite Streifen (28, 74, 100, 126, 132, 148, 152) und die Speichen (30, 77, 180, 184) aus chemisch inertem und zusammendrückbarem Material gefertigt sind.

15. Anwendung der Dichtung (24, 70, 90, 96, 98, 102, 124, 130, 136, 140, 146, 150, 172, 174, 178, 182) gemäß einem beliebigen der Ansprüche 1 - 14 in einer Baugruppe, enthaltend:
Die Dichtung (24, 70, 90, 96, 98, 102, 124, 130, 136, 140, 146, 150, 172, 174, 178, 182);
einen ersten Flansch (12);
einen zweiten Flansch (16), der im wesentlichen anliegend an den, und parallel zum, ersten Flansch (12) angeordnet ist und die Dichtung (24, 70, 90, 96, 98, 102, 124, 130, 136, 140, 146, 150, 172, 174, 178, 182) dazwischengelegt ist, und damit eine Verbindung definiert, wobei der zweite Flansch (16) einen Kanal (51) aufweist, der in Kommunikation mit einer Innenfläche und einer Außenfläche desselben steht, und der zweite Flansch (16) eine Rille (50) in der inneren Fläche (52) sowie einen Kanal (51) aufweist, der an einem Ende in Verbindung mit der Rille (50) und am anderen Ende mit der Außenfläche (54) des zweiten Flansches (16) steht.

16. Anwendung gemäß Anspruch 15, in dem die Befestigungselemente (18) Schrauben umfassen, die durch Öffnungen in den Flanschen (12, 16) und den Speichen (30) der Dichtung (24) gesteckt sind, und Muttern (20) auf die Schrauben aufgeschraubt sind.

17. Anwendung gemäß Anspruch 15 oder 16, in dem der Kanal (51) mit einem Abzapfmechanismus (57) verbunden ist.

18. Anwendung gemäß Anspruch 15 bis 17, in dem der Kanal (51) mit Mitteln (66) zum Erfassen eines Fluids verbunden ist.

19. Anwendung gemäß einem beliebigen der Ansprüche 15 bis 18, in dem der Kanal (51) mit einem Mittel (66) zum Einspeisen eines Fluids verbunden ist.

20. Anwendung gemäß einem beliebigen der Ansprüche 15 bis 19, in dem der Kanal (51) mit einem Mittel (66) zum Einspeisen eines Fluids verbunden ist, wobei der Kanal (51) mit Mitteln (66) zum Abziehen des Fluids verbunden ist.

21. Anwendung gemäß einem beliebigen der Ansprüche 15 bis 20, in dem mindestens einer der Flansche (12, 16) aus Polyvinylchlorid, chloriertem Poylyvinylchlorid, glasfaserverstärktem Kunststoff, Polyvinylidenfluorid oder Polypropylen besteht.

## Revendications

1. Joint d'étanchéité (24, 70, 90, 96, 98, 102, 124, 130, 136, 140, 146, 150, 172, 174, 178, 182) destiné à réaliser une étanchéité au niveau d'un raccordement entre une paire de brides de tubes (12, 16) en vue de raccorder une bride à l'autre, lesdites brides (12, 16) ayant une périphérie intérieure de dimension et de forme connues et une périphérie extérieure de dimension et de forme connues, ainsi qu'une pluralité de dispositifs de fixation (18) disposés autour desdites brides, comprenant :
a) une première bande (26, 72) de matériau d'étanchéité servant de surface de mise en prise d'étanchéité dans un ensemble de brides de raccordement, ladite première bande (26, 72) étant formée suivant une boucle continue présentant une forme prédéterminée, ladite première bande (26, 72) ayant une périphérie extérieure dont la dimension est plus grande que la dimension de la périphérie intérieure desdites brides,
b) une seconde bande (28, 74, 100, 126, 132, 148, 152) dudit matériau d'étanchéité servant de surface de mise en prise d'étanchéité dans un ensemble de brides de raccordement, ladite seconde bande étant formée suivant une boucle continue présentant une forme prédéterminée, ladite seconde bande (28, 74, 100, 126, 132, 148, 152) ayant une périphérie intérieure dont la dimension est plus grande que ladite périphérie extérieure de ladite première bande (26, 72) et inférieure à la dimension de la périphérie extérieure desdites brides (12, 16),
c) une pluralité de rayons (30, 77, 180, 184) dudit matériau d'étanchéité, chacun étant disposé entre ladite première bande (26, 72) et ladite seconde bande (28, 74, 100, 126, 132, 148, 152) et étant fixé à celles-ci et s'étendant entre ladite première bande (26, 72) et ladite seconde bande (28, 74, 100, 126, 132, 148, 152),
ledit matériau d'étanchéité étant élastique et la dureté dudit matériau d'étanchéité étant inférieure à la dureté d'au moins l'une des brides de sorte que ledit matériau d'étanchéité se comprime lorsque les brides sont rapprochées et se dilate afin de conserver une étanchéité lorsque l'espace entre les brides augmente,
dans lequel ladite première bande (26, 72), ladite seconde bande (28, 74, 100, 126, 132, 148, 152) et lesdits rayons (30, 77, 180, 184)comprennent un seul élément de matériau pratiquement plat,
et les espaces (34, 84) entre ladite première bande (26, 72), ladite seconde bande (28, 74, 100, 126, 132, 148, 152) et ladite pluralité de rayons (30, 77, 180, 184) sont vides ou emploient un matériau de joint d'étanchéité significativement plus mince que celui qui forme ladite première bande (26, 72), ladite seconde bande (28, 74, 100, 126, 132, 148, 152) et ladite pluralité de rayons (30, 77, 180, 184).

2. Joint d'étanchéité selon la revendication 1, dans lequel ledit joint d'étanchéité (70) comprend en outre une troisième bande (76) dudit matériau d'étanchéité formé suivant une boucle pratiquement continue ayant une forme prédéterminée et présentant un diamètre plus grand que le diamètre des boucles formées par les première et seconde bandes (72, 74), le diamètre extérieur (86) de la seconde bande (74) étant pratiquement égal au diamètre de la périphérie extérieure d'une première bride sélectionnée et le diamètre extérieur (88) de la troisième bande (76) étant pratiquement égal au diamètre de la périphérie extérieure d'une seconde bride sélectionnée, et une autre pluralité de rayons (78) dudit matériau d'étanchéité s'étendant entre ladite troisième bande (76) et ladite seconde bande (74), dans lequel les espaces restants (82) entre ladite seconde bande (74), ladite troisième bande (76) et ladite autre pluralité de rayons (78) sont vides ou remplis d'un matériau significativement plus mince que celui qui forme les première à troisième bandes (72, 74, 76), ladite pluralité de rayons (77) et ladite autre pluralité de rayons (78).

3. Joint d'étanchéité (92, 102, 130, 140, 146, 150) selon la revendication 1, comprenant en outre des rayons d'alignement ouverts (94, 104, 134, 156, 165) dudit matériau d'étanchéité fixés à ladite seconde bande (74, 100, 132, 148, 152) de façon à s'étendre vers l'extérieur à partir de celle-ci, lesdits rayons d'alignement ouverts (94, 104, 134, 156, 165) définissant une concavité d'alignement (96, 106, 158) en vue d'un placement de façon adjacente à un dispositif de fixation.

4. Joint d'étanchéité (136, 140, 150, 172, 174) selon la revendication 1 ou 3, comprenant en outre au moins un rayon d'alignement fermé (138, 142, 160) dudit matériau d'étanchéité s'étendant vers l'extérieur à partir de ladite seconde bande (132, 152), dans lequel ledit au moins un rayon d'alignement fermé (138, 142, 160) comprend une ouverture (145) au travers de celui-ci destinée à recevoir un boulon.

5. Joint d'étanchéité (140, 150, 172, 174) selon la revendication 4, dans lequel ledit rayon d'alignement fermé (142, 160) comporte une partie d'oreille (144) qui s'étend au-delà des périphéries extérieures des brides (12, 16).

6. Joint d'étanchéité selon la revendication 5, dans lequel ladite partie d'oreille comprend des données d'identification disposées sur celle-ci.

7. Joint d'étanchéité (150, 172, 174) selon l'une quelconque des revendications 3 à 5, comprenant en outre un épaulement de centrage (162) dudit matériau d'étanchéité dépendant dudit rayon d'alignement ouvert (156, 165) et s'étendant de façon à pratiquement coïncider avec la périphérie extérieure d'au moins l'une des brides (12, 16).

8. Joint d'étanchéité (98, 102) selon la revendication 1, dans lequel ladite périphérie extérieure de ladite première bande (72) est pratiquement circulaire et ladite périphérie extérieure de ladite seconde bande (100) est pratiquement carrée.

9. Joint d'étanchéité (102) selon la revendication 8, dans lequel ladite périphérie extérieure de ladite seconde bande (100) définit une concavité (106) au niveau d'un coin respectif de celle-ci.

10. Joint d'étanchéité (124, 130, 136, 140, 146, 150, 172, 174, 178, 182) selon la revendication 1 ou l'une quelconque des revendications 3 à 9 , dans lequel la périphérie extérieure de ladite seconde bande (126, 132, 148, 152) comprend une encoche concave (112) destinée à recevoir une jauge d'épaisseur.

11. Joint d'étanchéité (124, 146, 182) selon la revendication 10, dans lequel la périphérie extérieure de ladite seconde bande (126, 148) comprend également, de façon adjacente à ladite encoche (112), une convexité correspondante (128) conçue pour conserver pratiquement la résistance mécanique de ladite seconde bande au niveau de l'emplacement de ladite encoche.

12. Joint d'étanchéité (130, 136, 140, 150, 172, 174, 178) selon la revendication 10, comprenant en outre un rayon de renfort (135, 154, 180) s'étendant entre ladite première bande (72) et ladite seconde bande (132, 152) et se raccordant à ladite seconde bande à proximité de l'emplacement de ladite encoche (112).

13. Joint d'étanchéité (24, 70, 124) selon la revendication 1 ou 2 ou 10, dans lequel lesdits rayons (30, 77) comportent des ouvertures respectives (32, 80) dans ceux-ci destinées à recevoir des éléments allongés desdits dispositifs de fixation (18).

14. Joint d'étanchéité (24, 70, 90, 96, 98, 102, 124, 130, 136, 140, 146, 150, 172, 174, 178, 182) selon l'une quelconque des revendications précédentes, dans lequel ladite première bande (26, 72), ladite seconde bande (28, 74, 100, 126, 132, 148, 152) et lesdits rayons (30, 77, 180, 184) sont faits d'un matériau chimiquement inerte et compressible.

15. Utilisation d'un joint d'étanchéité (24, 70, 90, 96, 98, 102, 124, 130, 136, 140, 146, 150, 172, 174, 178, 182) selon l'une quelconque des revendications 1 à 14 dans un ensemble comprenant :
ledit joint d'étanchéité (24, 70, 90, 96, 98, 102, 124, 130, 136, 140, 146, 150, 172, 174, 178, 182),
une première bride (12),
une seconde bride (16) disposée pratiquement de façon adjacente et parallèle à ladite première bride (12) et comportant ledit joint d'étanchéité (24, 70, 90, 96, 98, 102, 124, 130, 136, 140, 146, 150, 172, 174, 178, 182) disposé entre celles-ci, en définissant ainsi un raccordement, ladite seconde bride (16) comportant un canal (51) en communication avec une surface intérieure et une surface extérieure de celle-ci et ladite seconde bride (16) comportant une gorge (50) disposée dans ladite surface intérieure (52) et un canal (51) en communication, au niveau d'une première extrémité de celui-ci, avec ladite gorge (50) et, au niveau de l'autre extrémité de celui-ci, avec ladite surface extérieure (54) de ladite seconde bride (16).

16. Utilisation selon la revendication 15, dans laquelle lesdits dispositifs de fixation (18) comprennent des boulons disposés au travers d'ouvertures dans lesdites brides (12, 16) et lesdits rayons (30) dudit joint d'étanchéité (24), et des écrous (20) vissés sur lesdits boulons.

17. Utilisation selon la revendicationl5 ou 16, dans laquelle ledit canal (51) est raccordé à un mécanisme de piquage (57).

18. Utilisation selon l'une quelconque des revendications 15 à 17, dans laquelle ledit canal (51) est raccordé à un moyen (66) destiné à détecter des fluides.

19. Utilisation selon l'une quelconque des revendications 15 à 18, dans laquelle ledit canal (51) est raccordé à un moyen (66) destiné à fournir des fluides.

20. Utilisation selon l'une quelconque des revendications 15 à 19, dans laquelle ledit canal (51) est raccordé à un moyen (66) destiné à fournir des fluides, dans laquelle ledit canal (51) est raccordé à un moyen (66) destiné à enlever des fluides.

21. Utilisation selon l'une quelconque des revendications 15 à 20, dans laquelle au moins l'une desdites brides (12, 16) est faite de polychlorure de vinyle, de polychlorure de vinyle chloré, de matière plastique renforcée de fibres de verre, de polyfluorure de vinylidène ou de polypropylène.
